# EUROPÄISCHE PATENTSCHRIFT

(11) **EP 2 974 946 B1**
(45) Veröffentlichungstag und Bekanntmachung des Hinweises auf die Patenterteilung: **18.09.2019**
(21) Anmeldenummer: 15176436.2
(22) Anmeldetag: 13.07.2015
(51) Int. Cl.: B62D 53/00, G06F 13/00

(54) **ANHÄNGER FÜR EINEN ROUTENZUG**
TRAILER FOR A ROUTE TRAIN
REMORQUE DE CHARIOT TRACTEUR

(30) Priorität: 15.07.2014 DE 102014109211
(43) Veröffentlichungstag der Anmeldung: 20.01.2016
(73) Patentinhaber: Jungheinrich Aktiengesellschaft, 22047 Hamburg (DE)
(72) Erfinder: Ziemann, Jörg, 21149 Hamburg (DE); Schmidt, Carsten, 21354 Bleckede (DE)
(74) Vertreter: Hauck Patentanwaltspartnerschaft mbB

(56) Entgegenhaltungen:
- EP-A2- 2 487 067
- DE-A1-102010 062 052

## Beschreibung

Die vorliegende Erfindung betrifft einen Anhänger, der dafür vorgesehen ist, in einem Routenzug geschleppt zu werden.

Bei der innerbetrieblichen Logistik werden Routenzüge eingesetzt, um Material, Produkte und dergleichen innerhalb des Betriebes zu transportieren. Ein Routenzug fährt beispielsweise feste Stationen an, in denen dann das Material übernommen und abgesetzt werden kann. Der Routenzug besteht aus einem oder mehreren Schleppfahrzeugen, die einen oder mehrere Anhänger im Verband schleppen. Die Anhänger sind dafür ausgebildet, um materialführende Trolleys, Innenwagen, Käfigwagen und dergleichen aufzunehmen und diese im Routenzug mitzuführen. Bei den Anhängern ist zu unterscheiden, ob die Anhänger den zu transportierenden Trolley in einer angehobenen Position mitführen oder der Trolley mitgezogen wird und dabei selbständig fährt.

Aus EP 2 487 067 A2 ist ein Trailerzuganhänger für den innerbetrieblichen Warentransport bekannt geworden, bei dem ein rollengeführter Tragrahmen mit einem vorderen und einem hinteren Fahrwerk ausgestattet ist, der eine oder mehrere quer zur Fahrtrichtung stehende Hubeinrichtungen aufweist, die ein automatisierbares seitliches Aufschieben und Einziehen eines auf den Lastgabeln angeordneten Ladungsträgers erlaubt. Für den vollautomatischen Betrieb weist eine Steuereinrichtung an dem Anhänger eine Kommunikationsverbindung zu einem Zugschlepper auf. Die Kommunikationsverbindung ist bidirektional ausgebildet, so dass Zustandsmeldungen und Steuerbefehle zwischen dem Zugschlepper und dem Trailerzuganhänger in beiden Richtungen erfolgen können.

Aus DE 10 2011 012 407 A1 ist ein Anhänger für einen Schlepperzug bekannt geworden, der eine Ladefläche aufweist. Die Ladefläche wirkt mit einem Ladungsgewichtssensor und einer Bestimmungseinrichtung zur Bestimmung des Eigengewichts des Anhängers zusammen. Über eine Übermittlungseinrichtung werden Informationen zu Eigengewicht und/oder Ladungsgewicht an einen Empfänger übermittelt. Die Übermittlungseinrichtung besitzt einen Sender oder eine Kabelverbindung zu einem Schleppfahrzeug.

Aus DE 10 2010 062 052 A1 ist ein Lkw mit mehreren Anhängern bekannt geworden, die über Steuereinheiten mit einem Master-Anschluss und einem Slave-Anschluss verfügen und über eine Datenleitung den aktuellen Reifendruck an den Lkw übermitteln.

Der Erfindung liegt die Aufgabe zugrunde, einen Anhänger für einen Routenzug bereitzustellen, der zum Austausch von Daten in einem Routenzug in besonders einfacher Weise geeignet ist.

Erfindungsgemäß wird die Aufgabe durch einen Anhänger mit den Merkmalen aus Anspruch 1 gelöst. Vorteilhafte Ausgestaltungen bilden den Gegenstand der Unteransprüche.

Erfindungsgemäß ist ein Anhänger vorgesehen, der ausgebildet ist, um in einem Routenzug oder einem sonstigen Schleppverband geschleppt zu werden. Der Anhänger weist eine Schleppdeichsel zur Verbindung mit einem schleppenden Fahrzeug oder Anhänger und eine Anhängerkupplung zur Aufnahme einer Schleppdeichsel eines geschleppten Anhängers auf. Der erfindungsgemäße Anhänger ist mit einer Steuerung ausgestattet, die mit einer Steuerung des schleppenden Fahrzeugs oder Anhängers über ein Protokoll zum Austausch von Daten in Verbindung stehen kann. Die Steuerung kann ebenfalls mit einer Steuerung eines geschleppten Anhängers zum Austausch von Daten in Verbindung stehen, sofern ein geschleppter Anhänger vorhanden ist. Die Steuerung weist zwei Schnittstellen auf, von denen eine erste Schnittstelle als Slave und eine zweite Schnittstelle als Master ausgebildet ist. Bei der Kommunikation innerhalb eines Routenzuges erlaubt die Verwendung von Master- und Slave-Schnittstellen, die Kommunikation zwischen den Anhängern über nur einen gemeinsamen Kanal zu führen. Nicht für jeden Anhänger ist ein eigener Kanal zur Kommunikation mit dem Schleppfahrzeug erforderlich. Innerhalb des Kanals sind Sender und Empfänger durch das Protokoll identifizierbar. Durch die Festlegung der Schnittstellen als Master oder Slave ist eindeutig geregelt, wie auf diesem gemeinsamen Kanal zu kommunizieren ist. Hierbei fordert die als Master konfigurierte Schnittstelle die mit ihr verbundene Schnittstelle zum Absetzen von entsprechenden Nachrichten auf. Indem die als Master konfigurierte Schnittstelle stets mit einer als Slave konfigurierten Schnittstelle verbunden ist, wird ein unkontrollierter Zugang von mehreren Schnittstellen auf den gemeinsamen Kanal verhindert.

Gemäß der Erfindung betätigt die Steuerung eine an dem Anhänger vorgesehene Bremse. Hierbei wird, ansprechend auf ein Bremssignal, von der Steuerung der Bremsvorgang eingeleitet. Die Steuerung des Anhängers leitet dabei den Bremsvorgang mit einer Stärke ein, die abhängig von der in der Steuerung gespeicherten Position des Anhängers im Zug ist. Hierdurch kann ein Anhänger individuell, abhängig von seiner Position, in dem Routenzug beim Bremsen angesteuert werden. Eine solche positionsabhängige Bremsung des Anhängers trägt zur Stabilisierung des Routenzuges und beispielsweise seines Fahrverhaltens in Kurven bei. Bevorzugt bremst die Steuerung stärker, wenn die in der Steuerung gespeicherte Position des Anhängers weiter hinten im Zug liegt.

In einer vorteilhaften Ausgestaltung ist an dem Anhänger mindestens ein Kabel zur Verbindung mit einem schleppenden Fahrzeug oder Anhänger vorgesehen. Je nach Ausgestaltung der Anhänger ist eine kabelgebundene Verbindung zwischen den Anhängern auch für die Energieversorgung vorgesehen, so dass hier kein zusätzlicher Aufwand entsteht. Bevorzugt besitzt der Anhänger auch eine elektrische Steckverbindung, um den Kontakt mit dem Kabel und einem Stecker eines geschleppten Anhängers herzustellen.

In einer bevorzugten Ausgestaltung ist die erste Schnittstelle zur Verbindung mit einem schleppenden Fahrzeug oder Anhänger vorgesehen. Die erste Schnittstelle ist als Slave konfiguriert, so dass die Steuerung des Anhängers, ansprechend auf ein empfangenes Signal, antworten kann. Im Rahmen eines Routenzugs mit mehreren Anhängern bedeutet dies, dass Informationen, ausgehend von einem schleppenden Fahrzeug oder Anhänger, bei dem geschleppten Fahrzeug angefordert werden können.

In einer alternativen Ausgestaltung kann die erste Schnittstelle auch zur Verbindung mit dem schleppenden Fahrzeug oder Anhänger vorgesehen sein. Bei dieser Ausgestaltung initiiert dann der in Fahrtrichtung hinten liegende Anhänger den Kommunikationsvorgang mit einem in Fahrtrichtung vorne liegenden Anhänger oder Schleppfahrzeug.

In einer bevorzugten Ausgestaltung prüft die Steuerung des Anhängers, ob eine zur Verbindung mit einem geschleppten Anhänger vorgesehene Schnittstelle mit einer entsprechenden Schnittstelle an einem geschleppten Anhänger verbunden ist. Die Steuerung gibt eine entsprechende Kennung an das schleppende Fahrzeug oder den schleppenden Anhänger weiter. Auch kann die Steuerung die Kennung an den geschleppten Anhänger weitergeben. Die Weitergabe dieser Kennung erlaubt es, zu bestimmen, ob der Anhänger der letzte Anhänger in dem Zug ist oder ob noch weitere Anhänger von ihm geschleppt werden. Wird beim Weiterreichen der Kennung diese beispielsweise inkrementiert, so kann nicht nur der letzte Anhänger im Zug festgestellt werden, sondern jedem Anhänger eine Positionsnummer im Zug zugewiesen werden.

In einer bevorzugten Weiterbildung des erfindungsgemäßen Anhängers sind Bremslichter vorgesehen, die über die Steuerung angesteuert werden, wenn ein Bremsvorgang an dem Anhänger erfolgt und dieser ein letzter Anhänger in einem Routenzug ist. Auf diese Weise wird vermieden, dass an sämtlichen Anhängern eines Routenzuges Bremslichter aufleuchten, was für andere Personen irritierend sein kann. Durch die in der Steuerung ermittelte Position des Anhängers innerhalb des Routenzugs kann die Steuerung des Anhängers erkennen, ob der Anhänger der letzte Anhänger in einem Routenzug ist. In diesem Fall kann ein Bremsvorgang an dem Anhänger von einer Ansteuerung der Bremsleuchten begleitet werden.

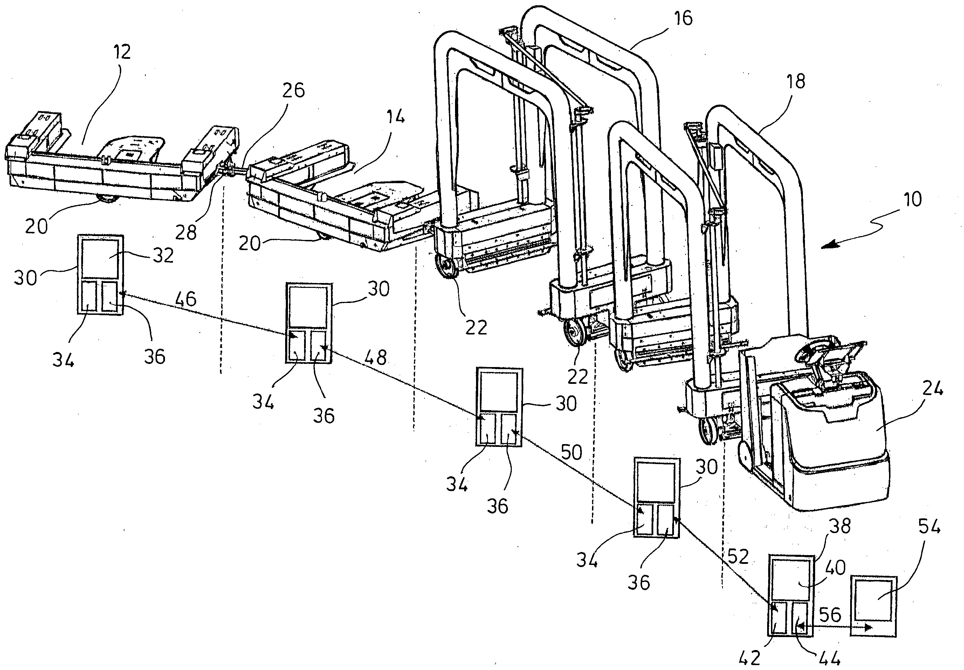

Die Erfindung wird nachfolgend an einem Ausführungsbeispiel näher erläutert. Die einzige Figur zeigt einen Routenzug 10 mit vier Anhängern 12, 14, 16, 18. Die Anhänger 12 und 14 sind E-förmige Anhängerrahmen mit zentral angeordneten Rädern. Die Anhänger 16 und 18 sind Portalanhänger, die mit vier Rädern 22 ausgestattet sind.

Geschleppt werden die vier Anhänger von einem Schleppfahrzeug 24, das einen Fahrerstandplatz aufweist. Gekoppelt sind die Anhänger jeweils über eine Deichsel 26, die mit einer Anhängerkupplung 28 verbunden ist.

Jeder Anhänger weist eine Steuereinheit 30 auf, die eine Steuerung 32 und zwei Schnittstellen 34 und 36 besitzt. Die Steuereinheit 30 ist identisch für jeden Anhänger vorgesehen und in der Figur nur schematisch dargestellt. Auch das Schleppfahrzeug 24 besitzt eine wie bei den Anhängern aufgebaute Steuereinheit 38 mit einer Steuerung 40 und zwei Schnittstellen 42 und 44.

Die Datenverbindung 46 zwischen den Anhängern 12 und 14 besteht zwischen der Schnittstelle 36 und der Schnittstelle 34. In dem dargestellten Ausführungsbeispiel ist die Schnittstelle 36 als Slave ausgebildet und die Schnittstelle 34 als Master. Dies bedeutet, dass der Anhänger 14 mit dem Anhänger 12 über die Datenverbindung 46 kommuniziert, wobei die Schnittstelle 34 die Kommunikation einleitet und vorgibt. Entsprechend verhält es sich bei den Datenverbindungen 48 und 50, die ebenfalls jeweils zwischen einer als Master konfigurierten Schnittstelle 34 und einer als Slave konfigurierten Schnittstelle 36 erfolgen. Die Datenverbindung 52 zu dem ersten Anhänger erfolgt zwischen den Schnittstellen 42 und 36, wobei die Schnittstelle 42 im Schleppfahrzeug 24 als Master konfiguriert ist. Eine übergeordnete Fahrzeugsteuerung 54 des Schleppers kommuniziert über die Datenverbindung 56 mit der Steuereinheit 38, wobei die übergeordnete Steuerung 54 in dem Schlepper als Master konfiguriert ist.

Bei der Positionsbestimmung für die Anhänger innerhalb des Routenzugs wird beispielsweise ein entsprechendes Positionssignal an der Schnittstelle 42 über die Datenverbindung 52 abgesetzt. Die Steuereinheit 32 zählt die Position einen hoch und leitet über die Datenverbindung 50 das Signal weiter. Das Signal kommt schließlich über die Datenverbindung 46 an dem Anhänger 12 an. Hier kann es über die Schnittstelle 34 nicht weitergeleitet werden, so dass der Anhänger 12 erkennt, dass er der letzte und vierte Anhänger im Routenzug ist. Sofern die Information, welcher Anhänger welche Position im Routenzug besitzt, für die übergeordnete Steuerung 54 relevant ist, können diese Informationen über die Datenverbindungen 46, 48, 50, 52 und 56 weitergeleitet werden. Alternativ ist es auch möglich, dass die Informationen lokal in den Anhängern verbleiben.

Wenn die Informationen an das Schleppfahrzeug 24 zurückgemeldet werden, so können diese in sinnfälliger Form dem Fahrer am Schleppfahrzeug angezeigt werden.

Aus der bekannten Position des Anhängers in einem Routenzug können eine Reihe von Vorteilen leicht umgesetzt werden. So ist es beispielsweise möglich, ein Bremslicht nur beim letzten Anhänger 12 des Routenzugs aufleuchten zu lassen. Auch ist es möglich, den Anhänger 12 beispielsweise stärker als die Anhänger 14, 16 und 18 zu bremsen, so dass auch bei einem Bremsvorgang die Anhänger stabil gehalten werden. Im Übrigen können auch gewisse Funktionen, wie beispielsweise ein Betätigen der Hubeinrichtung vor dem Losfahren, besser verarbeitet und einer Bedienperson beispielsweise mit der Position des angehobenen Anhängers zuverlässig angezeigt werden.

Als das Kommunikationsprotokoll für die Busse kann ein CAN-Bus eingesetzt werden. Es sind aber auch andere Feld-Busse, wie beispielsweise Profi-Bus, EtherCAT möglich.

Ein besonderer Vorteil der Erfindung liegt darin, das alle Anhänger in ihrer Hardware und Software gleich konfiguriert sind, unabhängig von ihrer Position in dem Routenzug.

## Patentansprüche

1. Anhänger, der dafür vorgesehen ist, in einem Routenzug geschleppt zu werden, wobei der Anhänger eine Schleppdeichsel zur Verbindung mit einem schleppenden Fahrzeug oder Anhänger und eine Anhängerkupplung zur Aufnahme einer Schleppdeichsel eines geschleppten Anhängers aufweist, wobei der Anhänger eine Steuerung besitzt, die mit einer Steuerung des schleppenden Fahrzeugs oder Anhängers über ein Protokoll zum Austausch von Daten in Verbindung steht und die ebenfalls mit einer Steuerung eines geschleppten Anhängers zum Austausch von Daten in Verbindung steht, sofern ein geschleppter Anhänger vorhanden ist, wobei die Steuerung zwei Schnittstellen aufweist, von denen eine erste Schnittstelle als Slave und eine zweite Schnittstelle als Master ausgebildet ist, **dadurch gekennzeichnet, dass** ansprechend auf ein Brems signal, die Steuerung eine Bremse des Anhängers betätigt, wobei die Steuerung den Bremsvorgang, abhängig von der in der Steuerung gespeicherten Position des Anhängers, einleitet.

2. Anhänger nach Anspruch 1, **dadurch gekennzeichnet, dass** mindestens ein Kabel zur Verbindung mit einem schleppenden Fahrzeug oder Anhänger vorgesehen ist.

3. Anhänger nach Anspruch 1 oder 2, **dadurch gekennzeichnet, dass** die erste Schnittstelle zur Verbindung mit einem schleppenden Fahrzeug oder Anhänger vorgesehen ist.

4. Anhänger nach Anspruch 1 oder 2, **dadurch gekennzeichnet, dass** die zweite Schnittstelle zur Verbindung mit einem schleppenden Fahrzeug oder Anhänger vorgesehen ist.

5. Anhänger nach Anspruch 3 oder 4, **dadurch gekennzeichnet, dass** die Steuerung prüft, ob mit einer zur Verbindung mit einem geschleppten Anhänger vorgesehenen Schnittstelle eine entsprechende Schnittstelle verbunden ist und die Steuerung eine entsprechende Kennung an das schleppende Fahrzeug oder den schleppenden oder geschleppten Anhänger weitergibt.

6. Anhänger nach einem der Ansprüche 1 bis 5, **dadurch gekennzeichnet, dass** die Steuerung Daten zu dem Betriebszustand der geschleppten Anhänger an einer der Schnittstellen empfängt, die Betriebszustände zu dem Anhänger hinzufügt und über die andere Schnittstelle an ein schleppendes Fahrzeug oder Anhänger weiterleitet.

7. Anhänger nach einem der Ansprüche 1 bis 6, **dadurch gekennzeichnet, dass** ein Deichselsensor vorgesehen ist, dessen erfasste Auslenkung an der Steuerung des Anhängers anliegt, wobei die Steuerung des erfassten Wert über die Schnittstelle zum schleppenden Fahrzeug oder Anhänger weiterleitet.

8. Anhänger nach einem der Ansprüche 1 bis 7, **dadurch gekennzeichnet, dass** eine Hubeinrichtung und ein Hubsensor vorgesehen sind, wobei der Hubsensor mit der Steuerung verbunden ist, eine angehobene Position der Hubeinrichtung erfasst und an die Steuerung anlegt, die den erfassten Wert an die Schnittstelle zum schleppenden Fahrzeug oder Anhänger weiterleitet.

9. Anhänger nach einem der Ansprüche 1 bis 8, **dadurch gekennzeichnet, dass** Bremslichter vorgesehen sind, die über die Steuerung angesteuert werden, wenn ein Bremsvorgang an dem Anhänger erfolgt und dieser als letzter in dem Routenzug vorgesehen ist.

10. Anhänger nach einem der Ansprüche 1 bis 9, **dadurch gekennzeichnet, dass** die Steuerung einen Bremsvorgang mit einer größeren Bremskraft einleitet, wenn in der Steuerung eine hintere Position des Anhängers gespeichert ist.

## Claims

1. Trailer intended to be towed in a route train, the trailer comprising a towing drawbar for connection to a towing vehicle or trailer and a trailer hitch for receiving a towing drawbar of a towed trailer, the trailer having a control system communicating with a control system of the towing vehicle or trailer via a data exchange protocol and also communicating with a control system of a towed trailer for data exchange, if a towed trailer is present, wherein the control system has two interfaces, a first interface of which is configured as a slave and a second interface of which is configured as a master, **characterized in that**, in response to a brake signal, the control system actuates a brake of the trailer, wherein the control system initiates the braking process depending on the position of the trailer stored in the control system.

2. Trailer according to claim 1, **characterized in that** at least one cable is provided for connection to a towing vehicle or trailer.

3. Trailer according to claim 1 or 2, **characterized in that** the first interface is provided in order to be connected to a towing vehicle or trailer.

4. Trailer according to claim 1 or 2, **characterized in that** the second interface is provided in order to be connected to a towing vehicle or trailer.

5. Trailer according to claim 3 or 4, **characterized in that** the control system checks whether a corresponding interface is connected to an interface intended for connection to a towed trailer and the control system passes on a corresponding identification to the towing vehicle or the towing or towed trailer.

6. A trailer according to one of claims 1 to 5, **characterized in that** the control system receives data on the operating condition of the towed trailers at one of the interfaces, adds the operating conditions to the trailer and forwards them via the other interface to a towing vehicle or trailer.

7. Trailer according to one of claims 1 to 6, **characterized in that** a drawbar sensor is provided, the detected deflection of which is applied to the control system of the trailer, the control system forwarding the detected value via the interface to the towing vehicle or trailer.

8. Trailer according to any one of claims 1 to 7, **characterized in that** a lifting device and a lifting sensor are provided, the lifting sensor being connected to the control system, detecting a raised position of the lifting device and applying it to the control system which forwards the detected value to the interface to the towing vehicle or trailer.

9. Trailer according to any of claims 1 to 8, **characterized in that** brake lights are provided which are controlled via the control system when a braking operation is carried out on the trailer and this trailer is intended to be the last in the route train.

10. Trailer according to any of claims 1 to 9, **characterized in that** the control system initiates a braking operation with a greater braking force when a rear position of the trailer is stored in the control system.

## Revendications

1. Remorque qui est prévue pour être tractée dans un train logistique, dans laquelle la remorque présente un timon de remorquage à raccorder à un véhicule tracteur ou à une remorque tractant et un attelage de remorque destiné à recevoir un timon de remorquage d'une remorque tractée, dans laquelle la remorque possède une commande, qui est en contact avec une commande du véhicule tracteur ou de la remorque tractant via un protocole d'échange de données et qui est également en contact avec une commande d'une remorque tractée pour échanger des données, pour autant qu'une remorque tractée existe, dans laquelle la commande présente deux interfaces, dont une première interface est constituée en esclave et une seconde interface en maître, **caractérisée en ce qu'**en réponse à un
signal de freinage, la commande actionne un frein de la remorque, dans laquelle la commande induit le processus de freinage en fonction de la position de la remorque enregistrée dans la commande.

2. Remorque selon la revendication 1, **caractérisée en ce qu'**au moins un câble est prévu pour le raccordement à un véhicule tracteur ou à une remorque tractant.

3. Remorque selon la revendication 1 ou 2, **caractérisée en ce que** la première interface est prévue pour le raccordement à un véhicule tracteur ou à une remorque tractant.

4. Remorque selon la revendication 1 ou 2, **caractérisée en ce que** la seconde interface est prévue pour le raccordement à un véhicule tracteur ou à une remorque tractant.

5. Remorque selon la revendication 3 ou 4, **caractérisée en ce que** la commande vérifie si une interface appropriée est reliée à une interface prévue pour le raccordement à une remorque tractée et que la commande transmet un identifiant correspondant au véhicule tracteur ou bien à la remorque tractant ou tractée.

6. Remorque selon l'une des revendications 1 à 5, **caractérisée en ce que** la commande reçoit des données relatives à l'état de fonctionnement des remorques tractées à l'une des interfaces, qu'elle ajoute les états de fonctionnement à la remorque et qu'elle les transmet à un véhicule tracteur ou à une remorque tractant via l'autre interface.

7. Remorque selon l'une des revendications 1 à 6, **caractérisée en ce qu'**un capteur de timon est prévu, dont la déviation détectée s'applique à la commande de la remorque, dans laquelle la commande transmet la valeur enregistrée au véhicule tracteur ou à la remorque tractant via l'interface.

8. Remorque selon l'une des revendications 1 à 7, **caractérisée en ce qu'**un dispositif de levage et un capteur de levage sont prévus, dans laquelle le capteur de levage est relié à la commande, détecte une position soulevée du dispositif de levage et l'applique à la commande, qui transmet la valeur enregistrée à l'interface jusqu'au véhicule tracteur ou à la remorque tractant.

9. Remorque selon l'une des revendications 1 à 8, **caractérisée en ce que** des feux de stop sont prévus, qui sont activés via la commande, lorsqu'un processus de freinage a lieu sur la remorque et que celle-ci est prévue en dernier dans le train logistique.

10. Remorque selon l'une des revendications 1 à 9, **caractérisée en ce que** la commande induit un processus de freinage avec une force de freinage plus grande, lorsqu'une position arrière de la remorque est enregistrée dans la commande.
